# EUROPEAN PATENT APPLICATION

(11) **EP 4 501 435 A1**
(43) Date of publication of application: **05.02.2025**
(21) Application number: 24169171.6
(22) Date of filing: 09.04.2024
(51) Int. Cl.: B01D 53/14, B01D 53/30

(54) **CONTROL APPARATUS AND CONTROL METHOD FOR CARBON DIOXIDE CAPTURING APPARATUS**

(30) Priority: 01.08.2023 JP 2023125775
(71) Applicant: Kabushiki Kaisha Toshiba, Tokyo 105-0023 (JP); Toshiba Energy Systems & Solutions Corporation, Saiwai-ku Kawasaki-shi Kanagawa (JP)
(72) Inventor: SHIROTA, Takahiro, Kawasaki-shi, Kanagawa (JP); MIURA, Takahiro, Kawasaki-shi, Kanagawa (JP); MURAOKA, Daigo, Kawasaki-shi, Kanagawa (JP); FUJITA, Koshito, Kawasaki-shi, Kanagawa (JP)
(74) Representative: Hoffmann Eitle

(57) **Abstract**

In one embodiment, a control apparatus for a carbon dioxide capturing apparatus includes a model creator configured to create a model for predicting a deterioration state of an absorbing solvent in the carbon dioxide capturing apparatus through learning, based on data regarding the carbon dioxide capturing apparatus, and a deterioration time determiner configured to determine a deterioration time of the absorbing solvent, using the model created by the model creator. The control apparatus further includes a computer configured to compute a replacement amount by which an entirety or a part of the absorbing solvent is to be replaced with a new absorbing solvent, based on the deterioration time determined by the deterioration time determiner. The control apparatus further includes a controller configured to control the carbon dioxide capturing apparatus, based on the replacement amount computed by the computer.

## Description

### FIELD

Embodiments described herein relate to a control apparatus and a control method for a carbon dioxide capturing apparatus.

### BACKGROUND

As one of effective measures against global warming, a carbon dioxide capture and storage (CCS) technology is attracting attention. For example, it is being examined worldwide to apply the CCS technology to facilities (a thermal power plant, an iron mill, a cement plant, and the like) that generate large amounts of exhaust gas containing carbon dioxide.

One CCS technology is a chemical absorption method of bringing exhaust gas containing carbon dioxide into contact with an absorbing solvent (absorbing liquid) to separate and capture carbon dioxide. Examples of the absorbing solvent used for the chemical absorption method include silicone oil, amine-based solutions, and ionic solutions.

For a carbon dioxide capturing apparatus using the CCS technology, a company occasionally sets a target value of a carbon dioxide capturing amount. In this case, the carbon dioxide capturing apparatus needs to be operated such that the carbon dioxide capturing amount is not below the target value.

Meanwhile, as with the carbon dioxide capturing apparatus, there is known a desulfurization apparatus that separates and captures sulfur compounds by bringing exhaust gas containing the sulfur compounds such as sulfur dioxide into contact with an absorbing solvent. For example, a conventional control apparatus controlling the desulfurization apparatus performs machine learning on relationship between operation data including a flow rate of circulation of the absorbing solvent and a concentration of sulfur dioxide at an outlet of an absorption tower to predict the concentration of sulfur dioxide. In this case, by determining the flow rate of circulation of the absorbing solvent such that the predicted concentration of sulfur dioxide is lower than a preset setting value, the capturing amount of the sulfur compounds can be made constant.

Use of the absorbing solvent for a long time in the carbon dioxide capturing apparatus or the sulfurization apparatus results in a loss of an absorbing solvent component (for example, an amine component) in the absorbing solvent, for example, caused by the absorbing solvent component in the absorbing solvent being discharged to the outside of the apparatus in capturing a target gas such as carbon dioxide or sulfur compounds. Consequently, a concentration of the absorbing solvent component in the absorbing solvent gradually decreases. Therefore, a long operation time of the apparatus causes the capturing amount of the target gas to start to decrease from a certain time point. Nevertheless, the aforementioned conventional control apparatus does not perform control in consideration of such a decrease in capturing amount. There is a concern that when the capturing amount of the target gas decreases, the capturing amount of the target gas goes below the target value.

In order to reduce the decrease in capturing amount, one can consider that the entirety or a part of the absorbing solvent in the apparatus is periodically replaced. One can otherwise consider that instead of the replacement of the absorbing solvent, the absorbing solvent is added into the apparatus, or the absorbing solvent used in the apparatus is replenished with the absorbing solvent component. The absorbing solvent is desirably being used without being replaced until immediately before the carbon dioxide capturing amount starts to decrease, in order to reduce operation costs since a ratio of the cost of the absorbing solvent relative to the operation costs of the carbon dioxide capturing apparatus is high. Moreover, as to the carbon dioxide capturing apparatus which replaces the entirety of the absorbing solvent at periodic maintenance, when the carbon dioxide capturing amount starts to decrease before the periodic maintenance, replacement is desirably performed with as less an amount as possible with which the carbon dioxide capturing amount can be maintained to be a desired value until the periodic maintenance.

### BRIEF DESCRIPTION OF THE DRAWINGS

FIG. 1 is a schematic diagram showing a configuration of a carbon dioxide capturing apparatus of a first embodiment;
FIG. 2 is a graph for explaining operation of the carbon dioxide capturing apparatus of the first embodiment;
FIG. 3 is a block diagram showing a configuration of a control apparatus 15 of the first embodiment;
FIG. 4 is a flowchart for explaining operation of the control apparatus 15 of the first embodiment;
FIG. 5 is a graph for explaining the operation of the carbon dioxide capturing apparatus of the first embodiment;
FIGS. 6A and 6B are graphs for explaining the operation of the carbon dioxide capturing apparatus of the first embodiment; and
FIG. 7 is a flowchart for explaining operation of a control apparatus 15 of a second embodiment.

### DETAILED DESCRIPTION

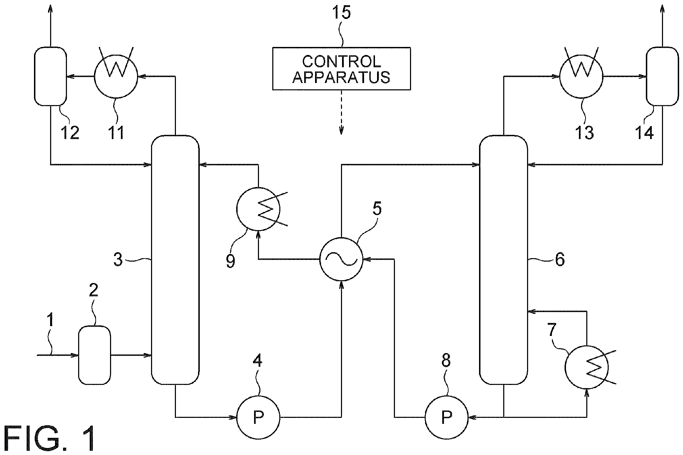

Embodiments will now be explained with reference to the accompanying drawings. In FIGS. 1 to 7, the same configurations are given the same signs, and their duplicate description is omitted.

As mentioned above, when carbon dioxide is captured using an absorbing solvent, the absorbing solvent needs to be replaced in consideration of various circumstances.

In a carbon dioxide capturing apparatus, a concentration of an absorbing solvent component in the absorbing solvent decreases due to factors as follows. First, the concentration of the absorbing solvent component decreases when carbon dioxide is recovered from the absorbing solvent in a regeneration tower. Second, the concentration of the absorbing solvent component decreases when condensed water arising in the carbon dioxide capturing apparatus is disposed in order to adjust a concentration of moisture in the absorbing solvent. Third, the concentration of the absorbing solvent component decreases when the absorbing solvent deteriorates depending on operation conditions of the carbon dioxide capturing apparatus. In the carbon dioxide capturing apparatus, a long operation time of the apparatus causes the carbon dioxide capturing amount to start to decrease from a certain time point.

As to the first and second factors, by managing operation of the carbon dioxide capturing apparatus to reduce the loss of the absorbing solvent component, the concentration decrease can be reduced. On the other hand, as to the third factor, since deterioration of the absorbing solvent cannot be prevented under use of the absorbing solvent for capturing carbon dioxide, it is difficult to reduce the concentration decrease.

A tendency is confirmed that when the absorbing solvent in the carbon dioxide capturing apparatus deteriorates, the carbon dioxide capturing amount steeply decreases. Therefore, deterioration of the absorbing solvent can be determined by measuring the carbon dioxide capturing amount. However, when the absorbing solvent is replaced after the decrease of the carbon dioxide capturing amount is confirmed, there arises a problem that the carbon dioxide capturing amount cannot be being maintained to be a desired value.

In one embodiment, a control apparatus for a carbon dioxide capturing apparatus includes a model creator configured to create a model for predicting a deterioration state of an absorbing solvent in the carbon dioxide capturing apparatus through learning, based on data regarding the carbon dioxide capturing apparatus, and a deterioration time determiner configured to determine a deterioration time of the absorbing solvent, using the model created by the model creator. The control apparatus further includes a computer configured to compute a replacement amount by which an entirety or a part of the absorbing solvent is to be replaced with a new absorbing solvent, an addition amount of a new absorbing solvent that is to be added to the absorbing solvent, or a replenishment amount of an absorbing solvent component with which the absorbing solvent is to be replenished, based on the deterioration time determined by the deterioration time determiner. The control apparatus further includes a controller configured to control the carbon dioxide capturing apparatus, based on the replacement amount, the addition amount or the replenishment amount computed by the computer.

### (First Embodiment)

FIG. 1 is a schematic diagram showing a configuration of a carbon dioxide capturing apparatus of a first embodiment.

As shown in FIG. 1, the carbon dioxide capturing apparatus of the present embodiment includes an exhaust gas line 1, an oxygen remover 2, an absorption tower (absorber) 3, a rich liquid pump 4, a regenerative heat exchanger 5, a regeneration tower (regenerator) 6, a reboiler 7, a lean liquid pump 8, a lean liquid cooler 9, a cooler 11, a gas-liquid separator 12, a cooler 13, a gas-liquid separator 14 and a control apparatus 15.

The exhaust gas line 1 feeds an exhaust gas containing carbon dioxide to the carbon dioxide capturing apparatus of the present embodiment from a facility such as a thermal power plant, an iron mill, or a cement plant. The exhaust gas in the exhaust gas line 1 is fed to the absorption tower 3 via the oxygen remover 2.

The oxygen remover 2 is arranged on the exhaust gas line 1 and removes oxygen from the exhaust gas introduced to the oxygen remover 2 from the exhaust gas line 1. The exhaust gas that oxygen is removed from by the oxygen remover 2 is introduced to the absorption tower 3 via the exhaust gas line 1.

The absorption tower 3 brings the exhaust gas and an absorbing solvent (lean liquid) into contact with each other and causes the absorbing solvent to absorb carbon dioxide in the exhaust gas. The absorption tower 3 discharges an absorbing solvent (rich liquid) that has absorbed the carbon dioxide, from a bottom part of the absorption tower 3. Meanwhile, an absorption tower discharge gas containing the exhaust gas that the carbon dioxide is removed from is discharged from a top part of the absorption tower 3. An example of the absorbing solvent is an amine-based aqueous solution.

The rich liquid pump 4 feeds the absorbing solvent discharged from the absorption tower 3 to the regeneration tower 6 via the regenerative heat exchanger 5. In this state, the regenerative heat exchanger 5 conducts heat exchange between the absorbing solvent that goes toward the regeneration tower 6 from the absorption tower 3 and an absorbing solvent that goes toward the absorption tower 3 from the regeneration tower 6.

The regeneration tower 6 heats the absorbing solvent (rich liquid) that is fed from the absorption tower 3 and causes the absorbing solvent to release carbon dioxide and steam. The regeneration tower 6 discharges the absorbing solvent (lean liquid) that has released the carbon dioxide, from a bottom part of the regeneration tower 6. Meanwhile, a regeneration tower discharge gas containing the released carbon dioxide and steam is discharged from a top part of the regeneration tower 6.

The reboiler 7 takes in a part of the absorbing solvent discharged from the regeneration tower 6 and heats the taken-in absorbing solvent. Consequently, the carbon dioxide and the steam are released from the absorbing solvent. The released carbon dioxide and steam, together with the absorbing solvent, are returned to the regeneration tower 6 and brought into contact with the absorbing solvent that is in the regeneration tower 6. Consequently, the absorbing solvent in the regeneration tower 6 is heated, and the carbon dioxide and the steam are released from the absorbing solvent in the regeneration tower 6.

The lean liquid pump 8 feeds another part of the absorbing solvent discharged from the regeneration tower 6, to the absorption tower 3 via the regenerative heat exchanger 5 and the lean liquid cooler 9. In this state, the regenerative heat exchanger 5 conducts heat exchange between the absorbing solvent that goes toward the absorption tower 3 from the regeneration tower 6 and the absorbing solvent that goes toward the regeneration tower 6 from the absorption tower 3. Furthermore, the lean liquid cooler 9 cools the absorbing solvent that goes toward the absorption tower 3 from the regeneration tower 6, and feeds the cooled absorbing solvent to the absorption tower 3.

The cooler 11 cools the absorption tower discharge gas discharged from the absorption tower 3. Consequently, steam contained in the absorption tower discharge gas is condensed to change into condensed water. The gas-liquid separator 12 separates the condensed water from the absorption tower discharge gas, and returns the separated condensed water to the absorption tower 3. The absorption tower discharge gas discharged from the gas-liquid separator 12 is a processed gas having an exhaust gas that carbon dioxide is removed from as a main component, and is released to ambient air.

The cooler 13 cools the regeneration tower discharge gas discharged from the regeneration tower 6. Consequently, steam contained in the regeneration tower discharge gas is condensed to change into condensed water. The gas-liquid separator 14 separates the condensed water from the regeneration tower discharge gas, and returns the separated condensed water to the regeneration tower 6. The regeneration tower discharge gas discharged from the gas-liquid separator 14 is a captured gas having carbon dioxide captured from the exhaust gas as a main component.

The control apparatus 15 controls various kinds of operation of the carbon dioxide capturing apparatus of the present embodiment. For example, the control apparatus 15 controls replacement processing of replacing the entirety or a part of the absorbing solvent in the carbon dioxide capturing apparatus of the present embodiment with a new absorbing solvent. Further details of the control apparatus 15 are mentioned later.

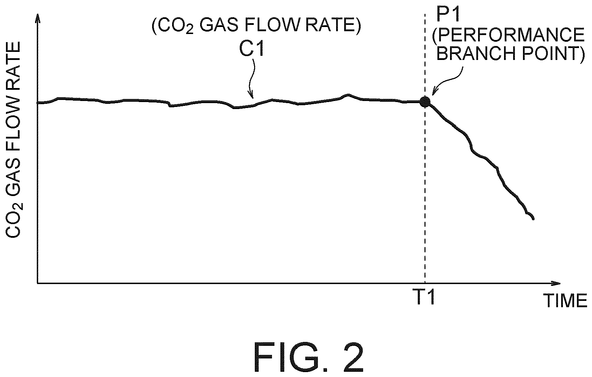

FIG. 2 is a graph for explaining operation of the carbon dioxide capturing apparatus of the first embodiment.

FIG. 2, the axis of abscissas denotes time, and the axis of ordinates denotes a CO₂ (carbon dioxide) gas flow rate. The CO₂ gas flow rate shown in FIG. 2 represents, for example, a flow rate of the CO₂ gas (captured gas) discharged from the gas-liquid separator 14. A curve C1 shown in FIG. 2 indicates a change of the CO₂ gas flow rate over time.

When in the present embodiment, the absorbing solvent in the carbon dioxide capturing apparatus deteriorates, the CO₂ gas flow rate steeply falls. In FIG. 2, the CO₂ gas flow rate steeply falls from point P1 at time T1. Point P1 is called performance branch point of the absorbing solvent.

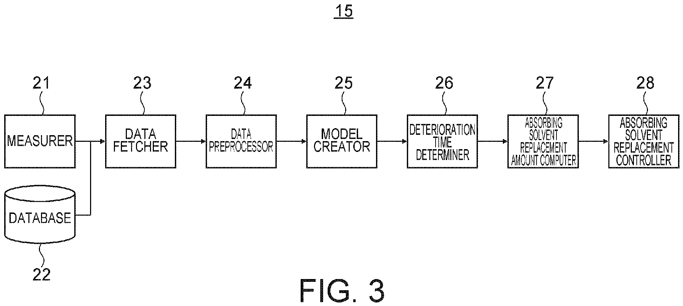

FIG. 3 is a block diagram showing a configuration of the control apparatus 15 of the first embodiment.

As shown in FIG. 3, the control apparatus 15 includes a measurer 21, a database 22, a data fetcher 23, a data preprocessor 24, a model creator 25, a deterioration time determiner 26, an absorbing solvent replacement amount computer 27, and an absorbing solvent replacement controller 28. The database 22 is an example of a storage. The absorbing solvent replacement amount computer 27 is an example of a computer. The absorbing solvent replacement controller 28 is an example of a controller.

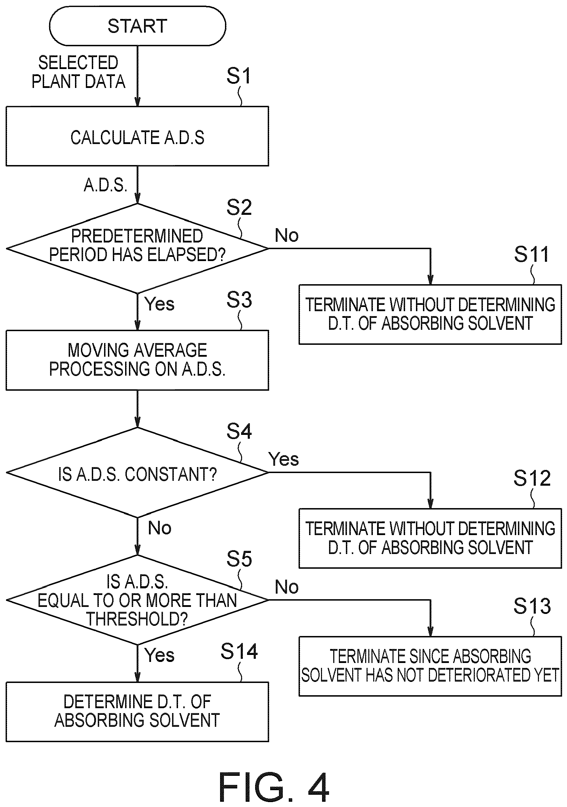

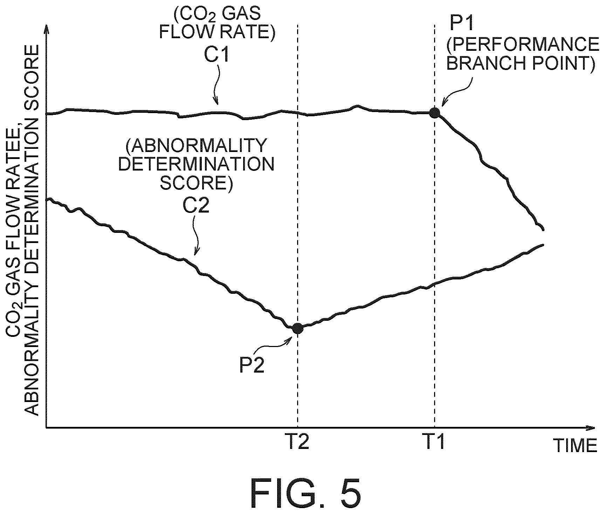

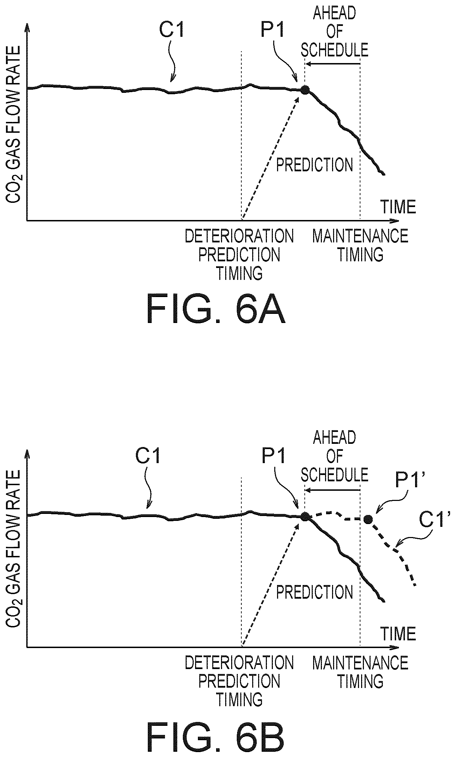

Hereafter, operation of the control apparatus 15 is described with reference to FIG. 3. In the following description, FIGS. 4, 5, and 6A and 6B are also properly referred to. FIG. 4 is a flowchart for explaining the operation of the control apparatus 15 of the first embodiment. FIGS. 5, 6A, and 6B are graphs for explaining the operation of the carbon dioxide capturing apparatus of the first embodiment.

### [Measurer 21]

The carbon dioxide capturing apparatus of the present embodiment includes a plurality of sensors that measure various data regarding the carbon dioxide capturing apparatus. These sensors measure, for example, a flow rate, a pressure, and a temperature of the absorbing solvent or the gas in the carbon dioxide capturing apparatus, a concentration of an absorbing solvent component (for example, amine component) contained in the absorbing solvent in the carbon dioxide capturing apparatus, a height of a liquid surface of the absorbing solvent collected in the bottom part of the absorption tower 3 or the regeneration tower 6, and the like. These sensors may measure other physical quantities of the absorbing solvent or the gas in the carbon dioxide capturing apparatus. Such data are called plant data (or CCS data) of the carbon dioxide capturing apparatus.

The measurer 21 measures the plant data using these sensors. For example, the measurer 21 acquires the plant data from these sensors by receiving signals including the plant data from these sensors.

The measurer 21 may measure other data. For example, the measurer 21 may measure a temperature, a pressure, a humidity, and the like of an environment where the carbon dioxide capturing apparatus is installed.

### [Database 22]

The database 22 stores the plant data measured by the measurer 21. The database 22 also further stores turning-on-and-off information of devices (for example, the rich liquid pump 4 and the lean liquid pump 8) in the carbon dioxide capturing apparatus.

The database 22 may store other data. For example, the database 22 may store plant data that is measured by a user in place of the measurer 21, and may store operation data and control signals of the carbon dioxide capturing apparatus.

### [Data Fetcher 23]

The data fetcher 23 fetches the plant data measured by the measurer 21 and the plant data stored in the database 22. The data fetcher 23 can fetch the current plant data from the measurer 21 and can fetch the past plant data from the database 22.

The data fetcher 23 outputs the plant data fetched from the measurer 21 and the database 22 to the data preprocessor 24. This plant data may be replaced by data including the plant data and the other data. The same is true for plant data appearing in the description mentioned later.

### [Data Preprocessor 24]

The data preprocessor 24 preprocesses the plant data fetched by the data fetcher 23 before the plant data is input to the model creator 25. The data preprocessor 24 inputs the plant data that has undergone the preprocessing to the model creator 25. Details of the preprocessing are hereafter described.

In general, the progress of deterioration of the absorbing solvent in the carbon dioxide capturing apparatus varies depending on a situation of operation of the carbon dioxide capturing apparatus. For example, when, without the amount of the absorbing solvent used for separating and capturing carbon dioxide in the carbon dioxide capturing apparatus being changed, the amount of the exhaust gas fed from the exhaust gas line 1 or the temperature of a device in the carbon dioxide capturing apparatus is changed, a carbon dioxide capturing amount occasionally changes. Therefore, deterioration of the absorbing solvent needs to be determined in consideration of a state of separating and capturing processing of carbon dioxide in the carbon dioxide capturing apparatus. Therefore, the data preprocessor 24 supplies the plant data to the model creator 25 in order to enable accurately determining deterioration of the absorbing solvent.

Nevertheless, there are many data items in the plant data measured with the sensors by the carbon dioxide capturing apparatus. Therefore, the plant data supplied to the data preprocessor 24 from the data fetcher 23 includes various data items. It is difficult for a human to determine correctly the influence of changes in plant data having these data items upon deterioration of the absorbing solvent.

Therefore, the control apparatus 15 of the present embodiment applies an AI (Artificial Intelligence) technology such as machine learning to the model creator 25, and thereby, predicts a deterioration time of the absorbing solvent. The data preprocessor 24 of the present embodiment performs preprocessing for AI processing in the model creator 25 on the plant data fetched by the data fetcher 23. Further details of the preprocessing are hereafter described.

The plant data supplied to the data preprocessor 24 also include items that are changing without affecting deterioration of the absorbing solvent. It is inferred that prediction accuracy of the deterioration time of the absorbing solvent decreases if the plant data that does not affect deterioration of the absorbing solvent is included in learning data for the AI processing.

Therefore, as the preprocessing, the data preprocessor 24 selects plant data that affect deterioration of the absorbing solvent out of the plant data supplied from the data fetcher 23. Specifically, the data preprocessor 24 calculates correlation values between the carbon dioxide capturing amount which is an amount changing when the absorbing solvent deteriorates and the plant data of various data items. Then, out of the plant data of these data items, the data preprocessor 24 selects only the plant data that strong correlation is found in. The data preprocessor 24 supplies the selected process data to the model creator 25.

For example, the temperature of the absorbing solvent, the temperature of the regeneration tower 6, a plant wastewater discharge amount, and the like tend to show strong correlation with the carbon dioxide capturing amount. Note that it is inferred that the plant data that show strong correlation are different depending on the scale of the carbon dioxide capturing apparatus and characteristics of a facility that feeds the exhaust gas. Therefore, the selection of the plant data in the present embodiment is individually performed for each carbon dioxide capturing apparatus, not being performed commonly for a plurality of carbon dioxide capturing apparatuses.

The data preprocessor 24 may select the plant data supplied to the model creator 25 by a different technique different from the aforementioned technique. This processing is hereinafter called selection processing.

Meanwhile, there is a case where the plant data supplied to the data preprocessor 24 includes outliers and missing measurements. The outliers and the missing measurements cause error factors in predicting the deterioration time of the absorbing solvent.

Therefore, as the preprocessing, the data preprocessor 24 removes data that are relevant to the outliers and the missing measurements out of the plant data supplied from the data fetcher 23. The data preprocessor 24 supplies the process data that the data relevant to the outliers and the missing measurements have been removed from to the model creator 25.

For example, the data preprocessor 24 performs a test for detecting outliers in process data (for example, Smirnoff-Grubbs test), and removes data that are determined as outliers from the process data. Moreover, when missing measurements are found in a part of the plurality of data items selected by the preprocessing, the data preprocessor 24 also removes, for a period that the missing measurements arise during, not only the process data of the data item(s) that the missing measurements are found in but also the process data of the data items that missing measurements are not found in. The reason is that when only the process data of the data item(s) that the missing measurements are found in are removed, there arises a difference in relation between the data items.

The data preprocessor 24 may remove such unnecessary data from the plant data by a different technique from the aforementioned technique. This processing is hereinafter called removal processing (or numerical processing).

The data preprocessor 24 of the present embodiment selects, out of the plant data supplied from the data fetcher 23, the plant data that affects deterioration of the absorbing solvent, and removes, out of the selected plant data, the data that are relevant to the outliers and the missing measurements. Then, the data preprocessor 24 of the present embodiment supplies the plant data that the data relevant to the outliers and the missing measurements have been removed from to the model creator 25. The plant data supplied to the model creator 25 includes the current plant data fetched from the measurer 21 and the past plant data fetched from the database 22.

The data preprocessor 24 may only perform any one of the selection processing and the removal processing in place of performing both the selection processing and the removal processing. Moreover, the plant data supplied to the model creator 25 may only include any one of the current plant data fetched from the measurer 21 and the past plant data fetched from the database 22.

### [Model Creator 25]

Based on the plant data input from the data preprocessor 24, the model creator 25 creates a model for predicting a deterioration state of the absorbing solvent in the carbon dioxide capturing apparatus through learning. The deterioration state of the absorbing solvent is a state of the absorbing solvent from a viewpoint regarding deterioration of the absorbing solvent. The model created by the model creator 25 is herein called CCS model. The model creator 25 creates the CCS model using the input plant data as learning data for the AI processing. For example, the model creator 25 creates the CCS model that can reproduce the curve C1 shown in FIG. 2.

Processing of creating the CCS model can be expressed as processing of modeling the carbon dioxide capturing apparatus. Examples of techniques of the modeling include a technique of modeling in consideration of the influence of time elapse on a change in learning data and a technique of modeling in consideration of features of learning data in the case where the learning data is in a normal state.

The former technique is applied, for example, when a prediction target fluctuates also under a large influence of time elapse. For example, the prediction target of the present embodiment is the carbon dioxide capturing amount of the carbon dioxide capturing apparatus or the deterioration time of the absorbing solvent predicted from the carbon dioxide capturing amount. The carbon dioxide capturing amount normally exhibits a constant value, and steeply decreases when the absorbing solvent deteriorates. Therefore, when the deterioration time is predicted from the carbon dioxide capturing amount, the prediction result of the deterioration time tends to be subject to the influence during a period when the carbon dioxide capturing amount exhibits the constant value. This possibly decreases prediction accuracy of the deterioration time. By the modeling in consideration of the influence of time elapse on the change in learning data, this technique can reduce such a decrease in accuracy.

On the other hand, according to the latter technique, by comparing the plant data in the normal state and the current plant data with each other, a measurement in displacement of the current plant data from the plant data in the normal state can be determined. For example, this technique is applied when abnormality of the current plant data is determined. As mentioned above, deterioration of the absorbing solvent is possibly affected by the plant data of various data items. According to this technique, the deterioration time can be predicted in consideration of not only the change in carbon dioxide capturing amount but also the changes in plant data of various data items during the progress of deterioration of the absorbing solvent.

Representative examples of techniques of modeling include HBOD (Histogram-Based Outlier Detection), PCA (Principal Component Analysis), and KNN (K-Nearest Neighbors Detector). The model creator 25 may use any technique in accordance with characteristics of the plant data in the carbon dioxide capturing apparatus of the present embodiment.

### [Deterioration Time Determiner 26]

The deterioration time determiner 26 determines the deterioration time of the absorbing solvent in the carbon dioxide capturing apparatus using the CCS model created by the model creator 25. For example, the deterioration time determiner 26 determines the deterioration time of the absorbing solvent along the flow shown in FIG. 4. Details of FIG. 4 are mentioned later.

The deterioration time determiner 26 calculates an abnormality determination score indicating the deterioration state of the absorbing solvent using the CCS model. For example, the abnormality determination score is a numerical value indicating the measurement in displacement of the current plant data from the plant data in the normal state. In the present embodiment, the deterioration state of the absorbing solvent is converted into a numerical value as the abnormality determination score. This processing is shown in step S1 of FIG. 4.

As with FIG. 2, FIG. 5 shows the curve C1 indicating the change of the CO₂ gas flow rate in the carbon dioxide capturing apparatus over time. FIG. 5 further shows a curve C2 indicating an example of a change of the abnormality determination score over time. The deterioration time determiner 26 determines the deterioration time of the absorbing solvent based on the abnormality determination score. The deterioration time determiner 26 calculates the abnormality determination score, for example, by employing a calculation method of the abnormality determination score in the modeling technique used by the model creator 25.

The abnormality determination score of the present embodiment is calculated using the plant data of the plurality of data items. Specifically, for each data item, a score indicating a measurement in displacement of the current plant data from the plant data in the normal state is calculated. Next, an average value of the scores of the plurality of data items is calculated. The deterioration time determiner 26 of the present embodiment employs this average value as the abnormality determination score. The deterioration time determiner 26 of the present embodiment calculates the abnormality determination score based on the current plant data measured by the measurer 21 and the data output from the CCS model. The plant data in the normal state used here may be the current plant data measured by the measurer 21, may be the past plant data stored in the database 22, or may be plant data derived based on the current plant data and/or the past plant data. The deterioration time determiner 26 of the present embodiment uses, as the current plant data and/or the past plant data, the plant data that has undergone the preprocessing by the data preprocessor 24.

The abnormality determination score is often higher as deterioration of the absorbing solvent is larger. Note that since immediately after the deterioration time starts to be determined, normal data (plant data in the normal state) of the data items are not established, the abnormality determination score is a high value. Therefore, if the abnormality determination score and a threshold are simply compared thereby to determine the deterioration time, this results in erroneous determination that the absorbing solvent has already deteriorated immediately after the deterioration time starts to be determined. In general, when an unused absorbing solvent starts to be used for capturing carbon dioxide, deterioration of the absorbing solvent is not large for a certain period after the start of use of the absorbing solvent. Therefore, in the present embodiment, determination of the deterioration time with the abnormality determination score is stopped during this period. Then, from the time point when the abnormality determination score decreases and then becomes constant, determination of the deterioration time is started. This processing is shown in steps S2 and S11 of FIG. 4.

Moreover, it is inferred that even after the abnormality determination score becomes constant, there arises dispersion in abnormality determination score in accordance with the operation situation of the carbon dioxide capturing apparatus. There is a concern that such noise causes erroneous determination that the absorbing solvent deteriorates. Therefore, in the present embodiment, moving average processing is performed on the abnormality determination score, and it is determined whether the abnormality determination score (moving average score) that undergoes the moving average processing is constant. Then, when the moving average score is constant, determination of the deterioration time is not performed. On the other hand, when the moving average score is not constant, determination of the deterioration time is performed. This processing is shown in steps S3, S4, and S12 of FIG. 4.

When determination of the deterioration time is performed, it is determined whether the abnormality determination score exceeds a preset threshold. When it is determined that the abnormality determination score is less than the threshold, the deterioration time determiner 26 determines that the absorbing solvent has not deteriorated yet, and does not determine the deterioration time. On the other hand, when it is determined that the abnormality determination score is equal to or more than the threshold, the deterioration time determiner 26 determines the deterioration time. The deterioration time determiner 26 may present the determined deterioration time and, for example, may display it on a screen of the displaying apparatus electrically connected to the control apparatus 15. This processing is shown in steps S5, S13, and S14 of FIG. 4.

In FIG. 5, the abnormality determination score rises from point P2 at time T2. Since the abnormality determination score indicates the measurement in displacement of the current plant data from the plant data in the normal state, the phenomenon as shown at point P2 occurs on the abnormality determination score as an indication regarding deterioration of the absorbing solvent. In FIG. 5, at time T1 after time T2, a fall of the CO₂ gas flow rate indicating deterioration of the absorbing solvent occurs. In the present embodiment, when such an indication occurs on the abnormality determination score at a certain time (herein, time T2), deterioration of the absorbing solvent is detected at a certain time after that (herein, time T1). Therefore, the deterioration time determiner 26 of the present embodiment detects the indication regarding deterioration of the absorbing solvent based on the abnormality determination score, and determines the deterioration time of the absorbing solvent based on the detected indication. For example, the deterioration time determiner 26 detects point P2 as the indication and calculates a prediction value of time T1 from time T2 when point P2 occurs. In this case, this prediction value is the deterioration time of the absorbing solvent.

It is inferred that the speed of deterioration progress of the absorbing solvent varies depending on the scale and the characteristics of the carbon dioxide capturing apparatus. It is moreover inferred that the tendency of occurrence of the indication regarding deterioration of the absorbing solvent also varies depending on the scale and the characteristics of the carbon dioxide capturing apparatus. Therefore, it is desirable to examine a period during which the deterioration time can be determined and rules for predicting the deterioration time from the indication, for each carbon dioxide capturing apparatus at trial operation. For example, the deterioration time determiner 26 or the like may automatically configure rules for calculating the prediction value of time T1 from time T2 at trial operation of the carbon dioxide capturing apparatus.

### [Absorbing Solvent Replacement Amount Computer 27]

The absorbing solvent replacement amount computer 27 computes a replacement amount by which the entirety or a part of the absorbing solvent in the carbon dioxide capturing apparatus is to be replaced with a new absorbing solvent, based on the deterioration time determined by the deterioration time determiner 26. The absorbing solvent replacement amount computer 27 is hereinafter abbreviated as "computer 27". When addition of the absorbing solvent is performed in place of the replacement of the absorbing solvent, the computer 27 calculates an addition amount of the new absorbing solvent to be added to the absorbing solvent in the carbon dioxide capturing apparatus. Otherwise, when replenishment with an absorbing solvent component is performed in place of the replacement of the absorbing solvent, the computer 27 computes a replenishment amount of the absorbing solvent component with which the absorbing solvent in the carbon dioxide capturing apparatus is to be replenished. The "replacement amount" appearing in the following description can be replaced by "addition amount" or "replenishment amount".

The computer 27 computes the replacement amount of the absorbing solvent based on the deterioration time determined by the deterioration time determiner 26 and a scheduled maintenance time of the carbon dioxide capturing apparatus. The scheduled maintenance time means a time that performance of maintenance of the carbon dioxide capturing apparatus is scheduled for. In the present embodiment, the scheduled maintenance time is also called date of maintenance performance or maintenance timing (see FIGS. 6A and 6B). Meanwhile, deterioration prediction timing shown in FIGS. 6A and 6B means timing when the deterioration time of the absorbing solvent is predicted (determined). The scheduled maintenance time of the present embodiment is a time that performance of periodic maintenance of the carbon dioxide capturing apparatus is scheduled for. In the present embodiment, at the periodic maintenance of the carbon dioxide capturing apparatus, the entire amount of the absorbing solvent in the carbon dioxide capturing apparatus is replaced with a new absorbing solvent (entire amount replacement). Before maintenance of the carbon dioxide capturing apparatus is performed, the computer 27 of the present embodiment can acquire information of the scheduled maintenance time of the maintenance.

FIG. 6A shows a case where the deterioration time (point P1) determined by the deterioration time determiner 26 is before the date of maintenance performance. When it is determined that the deterioration time is before the date of maintenance performance, the computer 27 calculates the minimum necessary replacement amount of the absorbing solvent with which the carbon dioxide capturing amount does not decrease from the current time point until the date of maintenance performance. In this case, at or around the aforementioned deterioration time, a part of the absorbing solvent in the carbon dioxide capturing apparatus is to be replaced with a new absorbing solvent by the calculated replacement amount. The reason for performing such replacement by the minimum necessary amount is that the entire amount replacement is to be performed at the date of maintenance performance. If replacement by an amount larger than that minimum necessary amount is performed, this results in replacement of the absorbing solvent that has not deteriorated at the entire amount replacement, which causes wastefulness. Note that when such a waste is small or such a waste does not cause a problem, for example, the computer 27 may calculate a replacement amount of the absorbing solvent larger than the minimum necessary amount. After calculation of the replacement amount, the computer 27 may present the deterioration time of the absorbing solvent and the replacement amount of the absorbing solvent and, for example, may display these on the aforementioned screen. FIG. 6B shows a situation that the replacement with the minimum necessary amount of the absorbing solvent leads to a change of the CO₂ gas flow rate from the curve C1 to a curve C1' and a change of the deterioration time (performance branch point) from point P1 to point P1'.

On the other hand, when it is determined that the deterioration time is after the date of maintenance performance, the computer 27 sets the replacement amount of the absorbing solvent to zero. In this case, the absorbing solvent in the carbon dioxide capturing apparatus is not to be replaced before the date of maintenance performance. After the replacement amount is set, the computer 27 may present the deterioration time of the absorbing solvent and the replacement amount (zero) of the absorbing solvent and, for example, may be displayed on the aforementioned screen. In place of presenting zero as the replacement amount, other information indicating that the replacement amount is zero may be presented.

As above, the computer 27 sets the replacement amount of the absorbing solvent to zero when the deterioration time is after the date of maintenance performance, and sets the replacement amount of the absorbing solvent to a value (positive value) other than zero when the deterioration time is before the date of maintenance performance. When the deterioration time is before the date of maintenance performance, the computer 27 may calculate the replacement amount for performing entire amount replacement of the absorbing solvent in place of calculating the replacement amount for performing partial replacement of the absorbing solvent.

It is inferred that the minimum necessary replacement amount of the absorbing solvent varies depending on the scale and the characteristics of the carbon dioxide capturing apparatus. Therefore, it is desirable to examine rules for calculating the minimum necessary replacement amount of the absorbing solvent and a delay of the deterioration time due to replacement of the absorbing solvent, for each carbon dioxide capturing apparatus at trial operation. For example, the computer 27 may create, based on data at the trial operation, an arithmetic expression or a decision table for calculating the minimum necessary replacement amount of the absorbing solvent. The arithmetic expression or the decision table may be created based on the past records of carbon dioxide capturing apparatus(es) with the same scale as that of the carbon dioxide capturing apparatus of the present embodiment. The arithmetic expression or the decision table may be created outside the control apparatus 15 and provided to the computer 27.

### [Absorbing Solvent Replacement Controller 28]

The absorbing solvent replacement controller 28 controls the carbon dioxide capturing apparatus based on the replacement amount computed by the computer 27. The absorbing solvent replacement controller 28 is hereinafter abbreviated as "controller 28". When addition of the absorbing solvent is performed in place of replacement of the absorbing solvent, the controller 28 controls the carbon dioxide capturing apparatus based on the addition amount computed by the computer 27. When replenishment with the absorbing solvent component is performed in place of replacement of the absorbing solvent, the controller 28 controls the carbon dioxide capturing apparatus based on the replenishment amount computed by the computer 27. The "replacement amount" appearing in the description below can be replaced by "addition amount" or "replenishment amount".

When it is determined that the deterioration time is before the date of maintenance performance, the computer 27 calculates the minimum necessary replacement amount of the absorbing solvent with which the carbon dioxide capturing amount does not decrease from the current time point until the date of maintenance performance. In this case, the controller 28 controls the carbon dioxide capturing apparatus such that at or around the aforementioned deterioration time, a part of the absorbing solvent in the carbon dioxide capturing apparatus is replaced with the new absorbing solvent by the aforementioned replacement amount. For example, the controller 28 drives a device (for example, pump) for replacing the absorbing solvent provided in the carbon dioxide capturing apparatus such that the replacement of the absorbing solvent as above is performed. Consequently, partial replacement of the absorbing liquid is performed in the carbon dioxide capturing apparatus. When the computer 27 calculates the replacement amount for entire amount replacement of the absorbing solvent, the controller 28 controls the carbon dioxide capturing apparatus such that the entire amount replacement of the absorbing solvent is performed.

This also applies to the case where addition or replenishment is performed in place of the replacement. When addition of the absorbing solvent is performed in place of replacement of the absorbing solvent, the controller 28 controls the carbon dioxide capturing apparatus such that at or around the aforementioned deterioration time, the new absorbing solvent is added to the absorbing solvent in the carbon dioxide capturing apparatus by the aforementioned addition amount. When replenishment with the absorbing solvent component is performed in place of replacement of the absorbing solvent, the controller 28 controls the carbon dioxide capturing apparatus such that at or around the aforementioned deterioration time, the absorbing solvent in the carbon dioxide capturing apparatus is replenished with the absorbing solvent component by the aforementioned replenishment amount.

On the other hand, when it is determined that the deterioration time is after the date of maintenance performance, the computer 27 sets the replacement amount of the absorbing solvent to zero. In this case, the controller 28 controls the carbon dioxide capturing apparatus such that the absorbing solvent in the carbon dioxide capturing apparatus is not replaced before the date of maintenance performance. This also applies to the case where addition or replenishment is performed in place of the replacement.

As above, the controller 28 does not perform the aforementioned replacement, addition, or replenishment when the deterioration time is after the date of maintenance performance, and performs the aforementioned replacement, addition, or replenishment when the deterioration time is before the date of maintenance performance. In the present embodiment, two or more of the aforementioned replacement, addition, and replenishment may be performed.

As above, the control apparatus 15 of the present embodiment creates the CCS model based on the plant data, determines the deterioration time of the absorbing solvent using the CCS model, computes the replacement amount or the like of the absorbing solvent based on the deterioration time, and controls the replacement or the like of the absorbing solvent based on the replacement amount or the like. Therefore, according to the present embodiment, the replacement or the like of the absorbing solvent can be performed while the carbon dioxide capturing amount is being maintained. Thereby, for example, operation costs of the carbon dioxide capturing apparatus can be reduced.

The carbon dioxide capturing apparatus controlled by the control apparatus 15 may have a different configuration from the configuration shown in FIG. 1. Moreover, the control apparatus 15 may be implemented by a computer program or may be implemented by an electric circuit. For example, the control apparatus 15 may be implemented by installing the computer program recorded in a recording medium such as a nonvolatile memory into a computer. Moreover, the control performed by the controller 28 may be performed by a human instead based on the replacement amount or the like output from the computer 27. The above also applies to a second embodiment mentioned later.

### (Second Embodiment)

A carbon dioxide capturing apparatus of the present embodiment has the configuration shown in FIG. 1 as with the carbon dioxide capturing apparatus of the first embodiment. Moreover, the control apparatus 15 of the present embodiment has the configuration shown in FIG. 3 as with the control apparatus 15 of the first embodiment. Hereafter, details of the carbon dioxide capturing apparatus and the control apparatus 15 of the present embodiment are described.

When the situation of operation of the facility that feeds the exhaust gas to the carbon dioxide capturing apparatus changes and a supply amount of the exhaust gas to the carbon dioxide capturing apparatus increases, the carbon dioxide capturing amount of the carbon dioxide capturing apparatus needs to be increased. In this case, there is taken an action of increasing the amount of the absorbing solvent used in the carbon dioxide capturing apparatus, or the like.

For example, when such a situation occurs after the deterioration time determiner 26 determines the deterioration time of the absorbing solvent, a load on the absorbing solvent increases more than before the determination. It is therefore inferred that deterioration of the absorbing solvent starts before the determined deterioration time. Namely, there is a possibility that point P1 shown in FIG. 6A moves to the left. Consequently, there is a possibility that point P1' shown in FIG. 6A moves more to the left of the maintenance timing. This means that the carbon dioxide capturing amount decreases before the date of maintenance performance. In this case, the carbon dioxide capturing amount cannot be maintained.

Therefore, the deterioration time determiner 26 of the present embodiment successively performs determination of the deterioration time of the absorbing solvent. Thereby, when operation conditions of the carbon dioxide capturing apparatus are changed after the deterioration time of the absorbing solvent is determined, the deterioration time determiner 26 can redetermine the deterioration time of the absorbing solvent in consideration of the change in the operation conditions of the carbon dioxide capturing apparatus. The change in the operation conditions of the carbon dioxide capturing apparatus can be taken into consideration, for example, by the deterioration time being determined based on the plant data measured after this change by the measurer 21. The change in the operation conditions of the carbon dioxide capturing apparatus can occur, as mentioned above, in the case where the situation of operation of the facility that feeds the exhaust gas to the carbon dioxide capturing apparatus changes, or the like.

In this case, the computer 27 of the present embodiment recomputes the aforementioned replacement amount, addition amount, or replenishment amount based on the deterioration time that is redetermined by the deterioration time determiner 26. Furthermore, the controller 28 of the present embodiment controls the carbon dioxide capturing apparatus based on the replacement amount, the addition amount, or the replenishment amount that is recomputed by the computer 27. Thereby, even when the operation conditions of the carbon dioxide capturing apparatus are changed, the carbon dioxide capturing amount can be maintained.

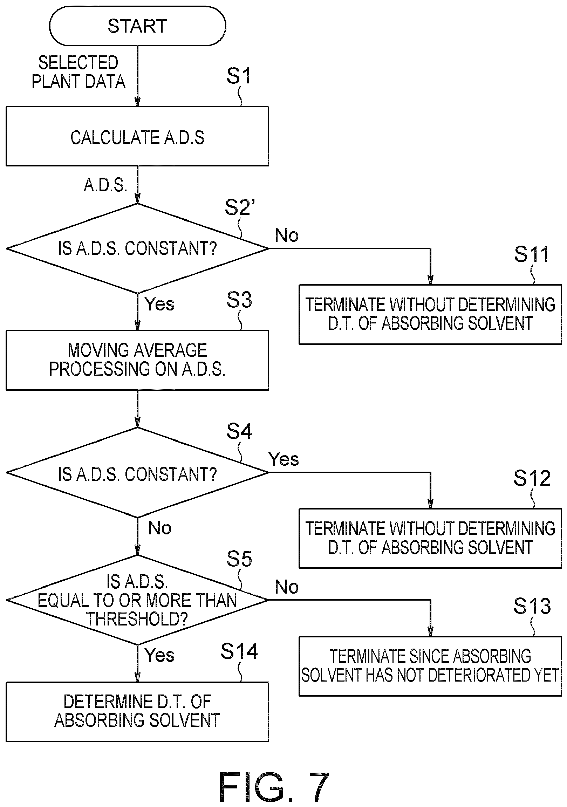

FIG. 7 is a flowchart for explaining operation of the control apparatus 15 of the second embodiment.

FIG. 7 shows a flow of operation of the deterioration time determiner 26 in redetermining the deterioration time of the absorbing solvent. FIG. 7 is the flowchart having step S2' substituted for step S2 in FIG. 4.

In FIG. 7, it is supposed that replacement of the absorbing solvent is performed before the deterioration time is redetermined. In this case, it is inferred that when replacement of the absorbing solvent is performed, the abnormality determination score shifts from its rising to its falling. Moreover, it is inferred that the abnormality determination score does not become sufficiently small since the replacement of the absorbing solvent causes the nature of the absorbing solvent after the replacement to differ from the nature of the absorbing solvent before the replacement.

Therefore, in step S2', it is determined whether the abnormality determination score becomes constant again after replacement of the absorbing solvent, in place of determination of the deterioration time with the abnormality determination score being stopped during the predetermined period (see step S2). Then, when it is determined that the abnormality determination score becomes constant, step S3 is started.

According to the present embodiment, even when the operation conditions of the carbon dioxide capturing apparatus are changed, replacement or the like of the absorbing solvent can be performed while the carbon dioxide capturing amount is being maintained.

While certain embodiments have been described, these embodiments have been presented by way of example only, and are not intended to limit the scope of the inventions. Indeed, the novel apparatuses and methods described herein may be embodied in a variety of other forms; furthermore, various omissions, substitutions and changes in the form of the apparatuses and methods described herein may be made without departing from the spirit of the inventions. The accompanying claims and their equivalents are intended to cover such forms or modifications as would fall within the scope and spirit of the inventions.

## Claims

1. A control apparatus for a carbon dioxide capturing apparatus, comprising:
a model creator configured to create a model for predicting a deterioration state of an absorbing solvent in the carbon dioxide capturing apparatus through learning, based on data regarding the carbon dioxide capturing apparatus;
a deterioration time determiner configured to determine a deterioration time of the absorbing solvent, using the model created by the model creator;
a computer configured to compute a replacement amount by which an entirety or a part of the absorbing solvent is to be replaced with a new absorbing solvent, an addition amount of a new absorbing solvent that is to be added to the absorbing solvent, or a replenishment amount of an absorbing solvent component with which the absorbing solvent is to be replenished, based on the deterioration time determined by the deterioration time determiner; and
a controller configured to control the carbon dioxide capturing apparatus, based on the replacement amount, the addition amount or the replenishment amount computed by the computer.

2. The control apparatus of Claim 1, wherein the deterioration time determiner calculates an abnormality determination score indicating the deterioration state of the absorbing solvent using the model created by the model creator, and determines the deterioration time of the absorbing solvent based on the abnormality determination score.

3. The control apparatus of Claim 2, wherein the deterioration time determiner detects an indication regarding deterioration of the absorbing solvent based on the abnormality determination score, and determines the deterioration time of the absorbing solvent based on the detected indication.

4. The control apparatus of Claim 1, wherein the computer computes the replacement amount, the addition amount or the replenishment amount, based on the deterioration time determined by the deterioration time determiner and a scheduled maintenance time of the carbon dioxide capturing apparatus.

5. The control apparatus of Claim 4, wherein the computer sets the replacement amount, the addition amount or the replenishment amount to zero when the deterioration time is after the scheduled maintenance time, and sets the replacement amount, the addition amount or the replenishment amount to a positive value when the deterioration time is before the scheduled maintenance time.

6. The control apparatus of Claim 4, wherein the controller does not perform the replacement, the addition or the replenishment before the scheduled maintenance time when the deterioration time is after the scheduled maintenance time, and performs the replacement, the addition or the replenishment before the scheduled maintenance time when the deterioration time is before the scheduled maintenance time.

7. The control apparatus of Claim 1, wherein the controller controls the carbon dioxide capturing apparatus such that the entirety or the part of the absorbing solvent is replaced with the new absorbing solvent by the replacement amount, or such that the new absorbing solvent is added to the absorbing solvent by the addition amount, or such that the absorbing solvent is replenished with the absorbing solvent component by the replenishment amount.

8. The control apparatus of Claim 1, further comprising:
a measurer configured to measure data regarding the carbon dioxide capturing apparatus; and
a storage configured to store data regarding the carbon dioxide capturing apparatus,
wherein the model creator creates the model based on the data measured by the measurer and the data stored in the storage.

9. The control apparatus of Claim 8, further comprising:
a data fetcher configured to fetch the data measured by the measurer and the data stored in the storage; and
a data preprocessor configured to preprocess the data fetched by the data fetcher before the data is input into the model creator,
wherein the model creator creates the model, using the data having undergone the preprocessing as learning data.

10. The control apparatus of Claim 9, wherein the preprocessing by the data preprocessor includes selecting predetermined data out of the data fetched by the data fetcher.

11. The control apparatus of Claim 10, wherein the data preprocessor selects the predetermined data, based on a correlation value between the data fetched by the data fetcher and a carbon dioxide capturing amount of the carbon dioxide capturing apparatus.

12. The control apparatus of Claim 9, wherein the preprocessing by the data preprocessor includes removing predetermined data from the data fetched by the data fetcher.

13. The control apparatus of Claim 12, wherein the predetermined data is data regarding an outlier or a missing measurement in the data fetched by the data fetcher.

14. The control apparatus of Claim 1, wherein
when an operation condition of the carbon dioxide capturing apparatus is changed after the deterioration time of the absorbing solvent is determined, the deterioration time determiner redetermines the deterioration time of the absorbing solvent in consideration of the change in the operation condition of the carbon dioxide capturing apparatus,
the computer recomputes the replacement amount, the addition amount or the replenishment amount, based on the deterioration time redetermined by the deterioration time determiner, and
the controller controls the carbon dioxide capturing apparatus, based on the replacement amount, the addition amount or the replenishment amount recomputed by the computer.

15. A control method for a carbon dioxide capturing apparatus, comprising:
creating, by a model creator, a model for predicting a deterioration state of an absorbing solvent in the carbon dioxide capturing apparatus through learning, based on data regarding the carbon dioxide capturing apparatus;
determining a deterioration time of the absorbing solvent by a deterioration time determiner, using the model created by the model creator;
computing, by a computer, a replacement amount by which an entirety or a part of the absorbing solvent is to be replaced with a new absorbing solvent, an addition amount of a new absorbing solvent that is to be added to the absorbing solvent, or a replenishment amount of an absorbing solvent component with which the absorbing solvent is to be replenished, based on the deterioration time determined by the deterioration time determiner; and
controlling the carbon dioxide capturing apparatus by a controller, based on the replacement amount, the addition amount or the replenishment amount computed by the computer.
